# FASCICULE DE BREVET EUROPEEN

(11) **EP 0 418 956 B1**
(45) Date de publication et mention de la délivrance du brevet: **01.12.1993**
(21) Numéro de dépôt: 90202424.9
(22) Date de dépôt: 12.09.1990
(51) Int. Cl.: F16K 11/087

(54) **Robinet mélangeur avec obturateur sphérique**
Mischventil mit Kugelhahn
Mixing valve with spherical plug

(30) Priorité: 22.09.1989 IT 6778589
(43) Date de publication de la demande: 27.03.1991
(73) Titulaire: MASCO GmbH, 69207 Sandhausen (DE)
(72) Inventeur: Grassberger, Roland, B-1060 Bruxelles (BE); Knapp, Alfons, Dr., D-7959 Biberach/Riss (BE)
(74) Mandataire: Patrito, Pier Franco, Dr. Ing.

(56) Documents cités:
- EP-A- 0 217 988
- DE-A- 3 018 771
- GB-A- 1 113 756

## Description

La présente invention a pour objet un robinet mélangeur avec un organe obturateur sphérique pourvu d'un organe de manoeuvre pour être déplacé en rotation suivant deux axes différents, et pourvu d'ouvertures coopérant avec des ouvertures d'entrée pour eau froide et eau chaude ayant des garnitures tubulaires en matériau élastomère, et avec des ouvertures de sortie pour eau mélangée, ménagées en un siège partiellement sphérique d'une partie fixe du robinet, pour régler le rapport de mélange entre eau chaude et froide ainsi que le débit d'eau mélangée livrée. Un robinet mélangeur de ce type est connu du GB-A-1 113 756.

Les robinets mélangeurs du type indiqué sont répandus parce qu'ils présentent des avantages, toutefois ils ont aussi certains inconvénients qui découlent spécialement du diamètre utile relativement réduit des garnitures tubulaires en matériau élastomère, par lesquelles entrent l'eau chaude et l'eau froide. La limitation de ce diamètre utile dérive principalement de la limitation du diamètre acceptable pour l'obturateur sphérique. Plus en particulier, ces robinets montrent un débit limité, une ainsi-dite "zone de comfort", à savoir l'ampleur de la course de l'organe de manoeuvre qui correspond aux reglages les plus fréquents, excessivement réduite, et un bruit relativement élevé en correspondance des débits les plus forts. Les inconvénients indiqués pourraient être réduits, bien entendu, en adoptant un diamètre utile plus grand des garnitures tubulaires, mais en pratique il n'est pas possible d'augmenter ce diamètre au-delà de certaines limites, d'un côté parce que, pour des raisons d'encombrement, cela demanderait une augmentation du diamètre de l'obturateur sphérique, et donc du robinet tout entier, et d'autre côté parce que, au-delà de certaines dimensions, les garnitures en matériau élastomère perderaient leur stabilité et exigeraient d'être pressées contre l'obturateur par une force excessive, qui donnerait lieu à des frottements et autres inconvénients.

Le but de la présente invention est de perfectionner les robinets du type considéré de sorte à améliorer leur performances, sous les différents points de vue du débit fourni, de l'ampleur de la zone de comfort et du bruit, sans pourtant introduire d'autres inconvénients ni devoir augmenter le diamètre de l'obturateur sphérique.

Ce but est atteint, suivant l'invention, dans un robinet du type considéré, en ce: qu'on prévoit deux ouvertures d'entrée avec des garnitures tubulaires pour un premier flux des deux flux entrant d'eau froide et d'eau chaude, et une seule ouverture d'entrée avec garniture tubulaire pour le deuxième desdits deux flux entrant d'eau, ces trois ouvertures d'entrée pourvues de garnitures tubulaires étant au moins approximativement alignées le long d'un cercle dans le siège partiellement sphérique de la partie fixe du robinet; et que dans l'obturateur sphérique est ménagée, pour l'entrée des eaux, une ouverture, allongée dans son ensemble, dont la longueur est telle à correspondre au moins approximativement à la longueur totale de deux ouvertures d'entrée successives, y inclus la distance les séparant.

En vertu de cette disposition, dans la condition ouverte du robinet et dans les conditions dont l'emploi est plus fréquent, au moins deux ouvertures d'entrée sont rendues actives en les mettant en communication avec l'intérieur de l'obturateur, ces deux ouvertures pouvant être, suivant la condition de mélange choisie entre deux positions caractéristiques de mélange, les deux ouvertures d'entrée pour le premier flux d'eau ou bien une ouverture d'entrée pour le premier flux d'eau et l'ouverture d'entrée pour le deuième flux d'eau, tandis que dans les conditions intermédiaires entre les positions indiquées il y a une ouverture d'entrée complètement active et deux ouvertures d'entrées adjacentes partiellement actives. Tout en respectant les limites imposées pour les dimensions du robinet et pour le diamètre utile des garnitures d'entrée, le débit maximum est substantiellement augmenté du fait que dans les conditions d'emploi plus fréquent sont actives en même temps en total deux ouvertures d'entrée, au lieu qu'une seulement, ou bien deux ouvertures toutes les deux partiellement fermées, comme il s'avère dans les robinets connus. De ce fait il résulte aussi une réduction de la vitesse avec laquelle les flux d'eau entrent dans l'organe obturateur, et donc une réduction du bruit en correspondence des débits plus forts. Enfin, les ouvertures d'entrée disponibles étant trois, au lieu que deux seulement comme dans les robinets connus, on peut distribuer ces ouvertures le long du cercle sur lequel elles sont au moins approximativement alignées de sorte à comprendre un angle total d'étendue considérable. Il s'ensuit une ampleur substantiellement plus grande de l'angle le long duquel on doit déplacer l'obturateur pour modifier le rapport de mélange, et donc une ampleur plus grande de la zone de comfort.

De préférence ladite ouverture allongée dans son ensemble de l'organe obturateur est divisée par des ponts en nombre de parties plus petites. En vertu de cette disposition, toute possibilé est prévenue que les garnitures tubulaires des ouvertures d'entrée soient poussées par la pression dans l'ouverture de l'organe obturateur, ou bien que ces garnitures puissent être endommagées par les bords de ladite ouverture pendant le fonctionnement du robinet.

Ces caractéristiques et d'autres, et les avantages de l'objet de l'invention, ressortiront plus clairement de la suivante description d'un mode de réalisation, donné à titre d'exemple mais nullement limitatif, représenté d'une façon schématique dans les dessins annexés, dans lesquels:
Fig. 1 montre une section axiale faite suivant la ligne brisée I-I de la figure 2 à travers un robinet qui applique l'invention;
Fig. 2 est une vue en plan, suivant la flèche II de la figure 1, du siège partiellement sphêrique du robinet et des parties y afférentes, après enlèvement de l'obturateur sphérique et d'autres composants;
Fig. 3 montre, isolé, l'obturateur sphérique pour le robinet représenté dans la figure 1;
Fig. 4 montre un organe de guidage pour l'obturateur sphérique, faisant partie du robinet suivant la figure 1; et
Figs. 5 à 11 sont des représentations schématiques du procédé de mélange qui a lieu dans le robinet mélangeur décrit.

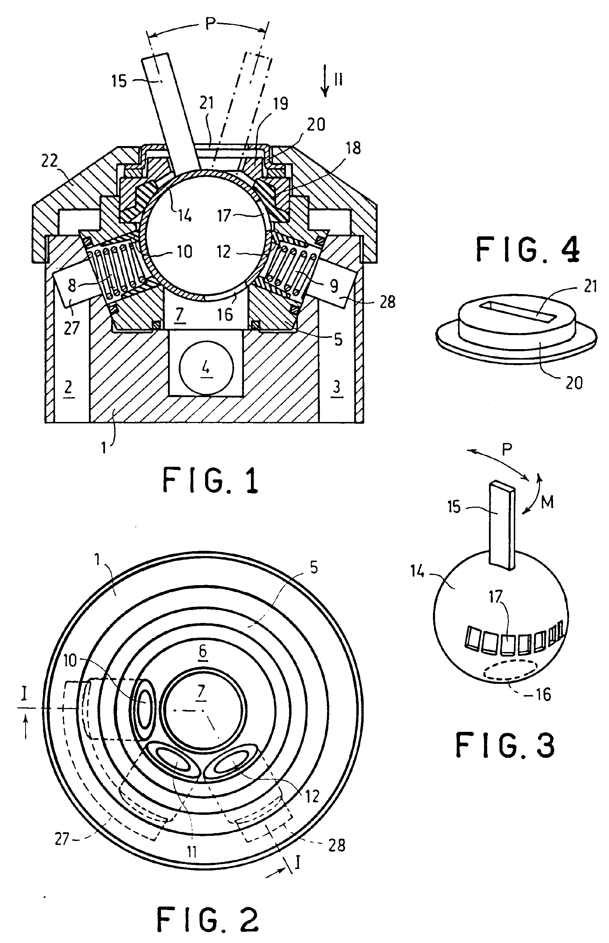

Faisant référence d'abord aux figures 1 à 4, dans un mode de réalisation possible un robinet à obturateur sphérique comprend un corps 1 dans lequel on peut noter des conduits 2 et 3 pour l'entrée de l'eau froide et de l'eau chaude, et un passage 4 pour le débit de l'eau mélangée. Dans un siège approprié du corps 1 est inséré un organe auxiliaire (pourvu des garnitures nécessaires pour faire étanchéité par rapport au corps 11, lequel forme un siège partiellement sphérique 6 pour un organe obturateur sphérique, une ouverture de passage 7 pour l'eau mélangé, qui communique avec le passage de débit 4 du corps 1, et des ouvertures d'entrée, communiquant avec les conduits 2 et 3 du corps 1, pour l'eau froide et pour l'eau chaude. Dans lesdites ouvertures d'entrée sont insérées des garnitures tubulaires en matériau élastomère, respectivement 10, 11 et 12, chacune desquelles est poussée vers l'intérieur du siège partiellement sphérique 6 par un propre ressort; deux de ces ressorts, 8 et 9, sont montrés dans la figure 1.

L'obturateur pour ce robinet, mieux représenté dans la figure 3, comporte un corps sphérique 14 pourvu d'une queue 15 qui est normalement connectée à un levier de commande (non représenté), lequel permet de déplacer l'obturateur suivant deux axes, à savoir suivant la flèche P des figures 1 et 3 (à l'effet de régler le débit fourni) et autour de l'axe de la queue 15, suivant la flèche M de la figure 3 (à l'effet de régler le rapport de mélange). Le corps sphérique 14 est pourvu d'une ouverture de sortie 16 laquelle communique avec le passage 7 pour l'eau mélangée, et d'une ouverture 17, allongée dans son ensemble, moyennant laquelle l'obturateur coopère avec les garnitures tubulaires 10-12 des ouvertures d'entrée. L'obturateur 14 est retenu dans sa position dans le siège partiellement sphérique 6 par un organe de retenue 19, avec l'interposition d'une garniture 18, et sa queue 15 est guidée dans une fente 21 d'un organe de guidage 20 monté tournant au-dessus de l'organe de retenue 19. Les parties décrites sont assemblées au corps 1 du robinet par un couvercle 22, vissé sur le corps 1.

La fonction de l'organe auxiliaire 5 est de faciliter l'usinage des ouvertures d'entrée. En effet, si l'organe 5 était d'une seule pièce avec le corps 1, lesdites ouvertures devraient être usinées à partir de l'intérieur, et cela ne serait pas possible par des moyens d'usinages communs en vue de la position de ces ouvertures. Au contraire, dans l'organe auxiliaire 5 séparé du corps 1 ces ouvertures peuvent être usinées à partir de l'extérieur, sans aucune difficulté. De plus, le corps 1 du robinet est généralement de laiton, tandis que l'organe auxiliaire 5 peut être réalisé en matière plastique. S'il est dessiné d'une façon appropriée, l'organe auxiliaire 5 peut constituer une cartouche.

Comme on le remarque sur la figure 2, les ouvertures d'entrée comportant les garnitures tubulaires 10-12 sont disposées alignées autour du siège partiellement sphérique 6. Deux de ces ouvertures, 10 et 11, communiquent avec le conduit 2 pour l'eau froide moyennant un canal périphérique 27, tandis que l'autre ouverture 12 communique avec le conduit 13 pour l'eau chaude moyennant un canal périphérique 28. Comme on peut le remarquer, la longueur totale de l'ouverture allongée 17 de l'obturateur est telle que, dans la condition d'ouverture (qu'on obtient en inclinant la queue 15 vers la droite suivant la figure 1) et dans les conditions d'emploi les plus fréquentes, cette ouverture allongée 17 communique toujours avec deux ouvertures d'entrée successives, lesquelles peuvent être les deux ouvertures 10 et 11 si l'on doit livrer de l'eau froide, ou bien les deux ouvertures 11 et 12 si l'on doit livrer de l'eau tiède. Donc, bien que les garnitures tubulaires 10-12 ont les dimensions habituelles, le débit maximum admis est bien plus grand, parce que (dans les conditions plus fréquentes d'ouverture du robinet) on a toujours deux ouvertures d'entrée successives en activité. De ce fait découlent les avantages indiqués.

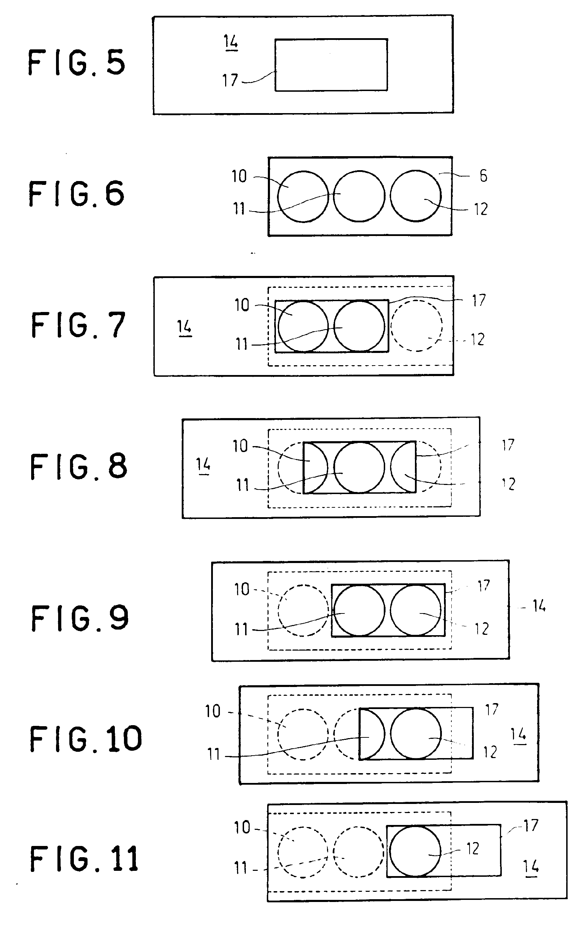

La progression du procédé de mélange au fur et à mesure que le déplacement de l'obturateur augmente, de la position de débit d'eau froide seulement vers la position de débit d'eau chaude seulement, est montrée schématiquement dans les figures 5 à 11. La figure 5 montre, développé en plan, le pourtour complexif de l'ouverture de passage 17 de l'obturateur 14, et la figure 6 montre, développée en plan, la disposition des ouvertures de passage 10 à 12, desquelles, dans le mode de réalisation décrit, les ouvertures 10 et 11 portent de l'eau froide et l'ouverture 12 porte de l'eau chaude.

La figure 7 montre la position relative de l'obturateur et des ouvertures de passage dans la condition de débit d'eau froide seulement. Comme on peut le remarquer, dans cette condition les deux ouvertures 10 et 11 sont découvertes, tandis que l'ouverture 12 est couverte par l'obturateur. De ce fait, seulement de l'eau froide est débitée, mais le débit maximum est double du débit admis par un robinet habituel, si les dimensions des garnitures tubulaires de passage pour l'eau sont égales.

En déplaçant l'obturateur de moitié du pas des ouvertures d'entrée de l'eau, on réalise la condition de la figure 8. Dans ce cas l'ouverture 11 est ouverte complètement, tandis que les ouvertures adjacentes 10 et 12 sont ouvertes pour la moitié. On a ainsi le mélange d'une quantité d'eau froide plus grande que la quantité d'eau chaude, tandis que le débit maximum demeure le même que dans la condition précédente.

En déplaçant encore d'un demi pas l'obturateur on arrive à la condition de la figure 9, dans laquelle les ouvertures 11 et 12 sont découvertes. On a alors le mélange d'eau chaude et froide en quantités égales, toujours conservant le même débit maximum admis par le robinet.

On doit remarquer que les conditions considérées jusqu'ici comprennent les conditions d'emploi plus fréquent, parce qu'elles correspondent au débit d'eau de froide à modérément chaude, tandis que seulement en des cas particuliers on exige de débiter de l'eau très chaude. Il est donc confirmé ce qu'on a affirmé précédemment, que dans les conditions d'emploi plus fréquent du robinet on a toujours en total deux ouvertures d'entrée en activité.

En procédant encore avec le déplacement de l'obturateur on entre dans le champ du débit d'eau très chaude; le débit maximum devient maintenant plus réduit. En effet, comme le montre la figure 10, quand le mélange comporte une partie d'eau froide pour deux parties d'eau chaude, l'ouverture 12 pour l'eau chaude est complètement ouverte, tandis que l'ouverture 11 pour l'eau froide est ouverte pour la moitié seulement.

En procédant ultérieurement avec le déplacement de l'obturateur, on arrive enfin à la condition limite de la figure 11, dans laquelle seulement l'ouverture 12 qui porte de l'eau chaude est ouverte. On débite maintenant de l'eau à la température maximum disponible, mais le débit maximum admis par le robinet a atteinte une valeur minimum, qui correspond au débit admis par une ouverture d'entrée seulement. Il est toutefois à remarquer que ce débit réduit est, pourtant, égal au débit maximum d'un robinet connu.

Bien entendu, toutes les positions intermédiaires entre celles qu'on a décrit sont possibles, et elles donnent lieu à des conditions de débit elles-mêmes intermédiaires entre celles considérées.

Comme on l'a dit, l'ouverture 17 de l'organe obturateur sphêrique 14, allongée dans son ensemble, pourrait être continue dans la direction longitudinale, comme elle est schématiquement représentée dans les figures 5 à 11, toutefois de préférence cette ouverture est divisée en des fenêtres relativement petites. Une telle division peut être faite en différentes manières. Par exemple cette ouverture peut être divisée par des ponts orthogonales en plusieurs fenêtres substantiellement rectangulaires, comme le montre la figure 3; ou bien elle peut être divisée par des ponts inclinés en définissant des fenêtres substantiellement rhomboïdales. Il est aussi possible de choisir des fenêtres au pourtour courbe. De plus, la ligne suivant laquelle les fenêtres sont alignées ne doit pas nécessairement être rectiligne comme suivant la figure 3: elle pourrait aussi être courbe, et les fenêtres dans lesquelles l'ouverture allongée dans son ensemble est divisée peuvent avoir des hauteurs différentes. Ces mesures de projet permettent de rendre la plus linéaire possible la réponse du robinet, en termes de modification de la température de l'eau mélangée débitée par rapport au déplacement de l' organe de manoeuvre.

Dans le mode de réalisation décrit on a prévu deux ouvertures pour l'entrée de l'eau froide et une ouverture seulement pour l'entrée de l'eau chaude. Cette condition est particulièrement satisfaisante pour les exigences les plus communes, comportant dans l'emploi le plus fréquent le débit d'une quantité prévalante d'eau froide. Toutefois, dans l'application de l'invention il est aussi possible d'employer les deux ouvertures 10 et 11 couplées pour le passage de l'eau chaude, et l'ouverture unique 12 pour le passage de l'eau froide. Une telle disposition est particulièrement appropriée pour l'emploi en combinaison avec un chauffe-eau instantané, soit-il électrique ou bien alimenté à gaz, lequel demande au début le débit d'une quantité relativement élevée d'eau chaude, lors de l'ouverture du robinet, pour mettre en activité le chauffe-eau. Toutefois, aussi dans ce cas on a l'avantage de rendre possible un débit plus grand dans les conditions intermédiaires de réglage, ainsi que d'enlarger le champ de réglage employé plus fréquemment.

L'application de l'invention ne demande pas de modifier la structure des garnitures tubulaires d'entrée et de leurs ressorts, les moyens de guidage de l'organe obturateur sphérique et certaines autres parties du robinet; par conséquent, plusieurs composants du robinet suivant l'invention peuvent être unifiés avec les composants correspondants des robinets réalisés suivant la technique précédente.

Dans les modes de réalisation représentés, les différentes ouvertures d'entrée ont été disposées sur un même cercle dans la surface partiellement sphérique du corps du robinet, toutefois on doit comprendre qu'aux effets de l'invention il est suffisant que cette condition soit respectée d'une façon approximative, et en particulier que la différence de niveau entre les différentes ouvertures ne dépasse pas le 50% du diamètre utile de ces ouvertures. Un certain déplacement des ouvertures peut être avantageux, par exemple en disposant sur un niveau la première ouverture d'entrée pour l'eau froide et l'ouverture d'entrée pour l'eau chaude, et sur un niveau légèrement différent la deuxième ouverture d'entrée pour l'eau froide. Cette disposition permet d'augmenter d'une façon correspondante l'extension de l'angle de manoeuvre afférent au réglage du débit.

L'ouverture de sortie 16 de l'obturateur sphérique 14 peut être disposée et dimensionnée, par rapport au passage de sortie 7 correspondant du corps 5, de sorte à fermer partiellement (ou bien aussi jusqu'à la fermeture complète) la section de passage lors que le robinet est réglé pour fournir un débit réduit, de sorte à produire un effet utile de pré-fermeture capable de réduire le bruit produit par le robinet et d'améliorer le réglage du débit, en le rendant plus linéaire.

Dans l'exemple représenté on a employé, pour guider l'obturateur sphérique, un organe de guidage avec fente qui coopère avec la queue de l'obturateur, mais on doit comprendre que tout autre dispositif de guidage de l'obturateur peut trouver application.

## Revendications

1. Robinet mélangeur avec un organe obturateur sphérique (14) pourvu d'un organe de manoeuvre (15) pour être déplacé en rotation suivant deux axes différents (flèches P,M), et pourvu d'ouvertures (17,16) coopérant avec des ouvertures d'entrée pour eau froide et eau chaude ayant des garnitures tubulaires (10,11,12) en matériau élastomère, et avec au moins une ouverture de sortie (7) pour eau mélangée, ces ouvertures (10,11,12,7) étant ménagées en un siège (6) partiellement sphérique d'une partie fixe (5) du robinet, pour régler le rapport de mélange entre eau chaude et froide ainsi que le débit d'eau mélangée livrée, caractérisé en ce: qu'on prévoit deux ouvertures d'entrée avec des garnitures tubulaires (10,11) pour un premier flux des deux flux entrant d'eau froide et d'eau chaude, et une seule ouverture d'entrée avec garniture tubulaire (12) pour le deuxième desdits deux flux entrant d'eau, ces trois ouvertures d'entrée pourvues de garnitures tubulaires (10-12) étant au moins approximativement alignées le long d'un cercle dans le siège partiellement sphérique (6) de la partie fixe (5) du robinet; et que dans l'obturateur sphérique (14) est ménagée, pour l'entrée des eaux, une ouverture (17), allongée dans son ensemble, dont la longueur est telle à correspondre au moins approximativement à la longueur totale de deux ouvertures d'entrée (10,11,12) successives, y inclus la distance les séparant.

2. Robinet mélangeur suivant la revendication 1, caractérisé en ce que lesdites ouvertures d'entrée (10-12) sont toutes alignées sur un même cercle du siège (6) partiellement sphérique de la partie fixe (5) du robinet.

3. Robinet mélangeur suivant la revendication 1, caractérisé en ce que lesdites ouvertures d'entrée (10-12) sont proches d'un même cercle sur le siège (6) partiellement sphérique de la partie fixe (5) du robinet, et leur différence mutuelle de niveau par rapport audit cercle ne dépasse pas le 50% du diamètre utile des garnitures tubulaires (10-12) insérées dans lesdites ouvertures d'entrée.

4. Robinet mélangeur suivant la revendication 1, caractérisé en ce que ladite ouverture (17), allongée dans son ensemble, ménagée dans l'organe obturateur sphérique (14), est continue.

5. Robinet mélangeur suivant la revendication 1, caractérisé en ce que ladite ouverture (17), allongée dans son ensemble, ménagée dans l'organe obturateur sphérique (14), est divisée par des ponts en nombre de parties plus petites.

6. Robinet mélangeur suivant la revendication 1, caractérisé en ce que l'ouverture de sortie (16) de l'organe obturateur sphérique (14) et l'ouverture de sortie (7) de la partie fixe (5) du robinet sont disposées et proportionnées de sorte que, dans certaines positions du robinet, elles limitent la section de passage, en réalisant un effet de pré-fermeture.

7. Robinet mélangeur suivant la revendication 1, caractérisé en ce qu'il comprend un organe auxiliaire (5), séparé du corps (1) du robinet, inséré et fixé dans ce corps, lesdites ouvertures d'entrée (10-12) étant ménagées dans cet organe auxiliaire (5).

8. Robinet mélangeur suivant la revendication 7, caractérisé en ce que ledit organe auxiliaire (5) a le caractère d'une cartouche.

9. Robinet mélangeur suivant une quelconque des revendications 1 à 8, caractérisé en ce que sur la surface (6) partiellement sphérique de la partie fixe (5) du robinet sont ménagées deux ouvertures (10,11) pour l'entrée d'eau froide et une ouverture (12) pour l'entrée d'eau chaude.

10. Robinet mélangeur suivant une quelconque des revendications 1 à 8, caractérisé en ce que sur la surface (6) partiellement sphérique de la partie fixe (5) du robinet sont ménagées deux ouvertures pour l'entrée d'eau chaude et une ouverture pour l'entrée d'eau froide.

## Patentansprüche

1. Mischarmatur mit einem kugelförmigen Verschlusskörper (14), der mit einem Betätigungsglied (15) zur Drehung nach zwei unterschiedlichen Achsen (Pfeile P,M) versehen ist, mit Oeffnungen (17,16) die mit mit schlauchförmigen Dichtungen (10,11,12) aus Elastomer versehenen Einlauföffnungen fur das kalte und das warme Wasser, und mit mindestens einer Auslauföffnung (7) für das gemischte Wasser zusammenwirken, um das Mischverhältnis zwischen kaltem und warmem Wasser sowie die Menge des ausfliessenden, gemischten Wassers zu regeln, wobei die Oeffnungen (10, 11,12,7) in einer zum Teil kugelförmigen Aufnahme (6) eines festen Gliedes (5) der Mischarmatur ausgebildet sind, dadurch gekennzeichnet: dass zwei Einlauföffnungen (10,11) fur einen ersten Strom der beiden einlaufenden Strome aus kaltem und warmem Wasser und nur eine Einlauföffnung mit schlauchförmiger Dichtung (12) für den zweiten der beiden einlaufenden Wasserströme vorgesehen sind, wobei diese drei mit schlauchförmigen Dichtungen (10-12) versehenen Einlauföffnungen in der zum Teil kugelförmigen Aufnahme (6) des festen Gliedes (5) der Mischarmatur wenigstens annähernd entlang eines Kreises angeordnet sind; und dass im kugelförmigen verschlusskörper (14) eine sich insgesamt in die Länge ziehende Wassereinlauföffnung (17) ausgebildet ist, deren Erstreckung wenigstens annähernd der Gesamterstreckung von zwei aufeinanderfolgenden Einlauföffnungen (10,11,12) einschliesslich des dieselben trennenden Abstandes entspricht.

2. Mischarmatur nach Anspruch 1, dadurch gekennzeichnet, dass sämtliche Einlauföffnungen (10-12) in dem einen und demselben Kreis der zum Teil kugelförmigen Aufnahme (6) des festen Gliedes (5) der Mischarmatur angeordnet sind.

3. Mischarmatur nach Anspruch 1, dadurch gekennzeichnet, dass sich die Einlauföffnungen (10-12) in der Nähe des einen und desselben Kreises der zum Teil kugelförmigen Aufnahme (6) des festen Gliedes (5) der Mischarmatur befinden und dass der jeweilige Höhenunterschied der Oeffnungen zu diesem Kreis nicht mehr als 50% des nutzbaren Durchmessers der in dem Einlauföffnungen eingesetzten schlauchförmigen Dichtungen (10-12) beträgt.

4. Mischarmatur nach Anspruch 1, dadurch gekennzeichnet, dass die im kugelförmigen Verschlusskörper (14) ausgebildete, sich insgesamt in die Lange ziehende Oeffnung (17) durchgehend ist.

5. Mischarmatur nach Anspruch 1, dadurch gekennzeichnet, dass die im kugelförmigen Verschlusskörper (14) ausgebildete, sich insgesamt in die Länge ziehende Oeffnung (17) durch Stege in mehrere kleinere Oeffnungen unterteil ist.

6. Mischarmatur nach Anspruch 1, daduch gekennzeichnet, dass die Auslauföffnung (16) des Kugelförmigen Verschlusskörpers (14) und die Auslauföffnung (7) des festen Gliedes (5) der Mischarmatur in einem solchen Verhältins zueinander angeordnet sind, dass sie in bestimmten Stellungen der Mischarmatur den Durchflussquerschnitt begrenzen und damit eine Vorschliesswirkung ausüben.

7. Mischarmatur nach Anspruch 1, dadurch gekennzeichnet, dass ein vom Gehäuse (1) getrenntes Hilfsglied (5) im Gehäuse der Mischarmatur eingesetzt und befestigt ist, und dass die Einlauföffnungen (10-12) in diesem Hilfsglied (5) ausgebildet sind.

8. Mischarmatur nach Anspruch 7, dadurch gekennzeichnet, dass das Hilfsglied (5) die form einer Patrone aufweist.

9. Mischarmatur nach irgendeinem der Ansprüche 1 bis 8, dadurch gekennzeichnet, dass in der zum Teil kugelförmigen Fläche (6) des festen Gliedes (5) der Mischarmatur zwei Einlauföffnungen (10,11) für das kalte Wasser und eine Einlauföffnung (12) für das warme Wasser ausgebildet sind.

10. Mischarmatur nach irgendeinem der Ansprüche 1 bis 8, dadurch gekennzeichnet, dass in der zum Teil kugelförmigen Fläche (6) des festen Gliedes (5) der Mischarmatur zwei Einlauföffnungen für das warme Wasser und eine Einlauföffnung für das kalte Wasser ausgebildet sind.

## Claims

1. A mixer valve having a spherical valving member (14) provided with a control member (15) for being displaced in rotation around two different axes (arrows P,M), and provided with openings (17,16) cooperating with inlet openings for the hot and cold water having tubular gaskets (10,11,12) of elastomeric material, as well as with at least one outlet opening (7) for the mixed water, said openings (10,11,12,7) being formed in a partially spherical seat (6) of a fixed member (5) of the valve, in order to regulate the mixing ratio between hot and cold water as well as the flow of delivered mixed water, characterized in that: two inlet openings with tubular gaskets (10,11) are provided for a first flow of the two incoming flows of hot and cold water, and only one inlet opening with tubular gasket (12) for the second flow of said two incoming water flows, said three inlet openings wherein the tubular gaskets (10-12) are inserted being at least approximately aligned along a circle within said partially spherical seat (6) of the fixed member (5) of the valve; and that in the spherical valving member (14) there is formed, for inlet of water, an opening (17) which is elongated in its whole, and which has an extension such as to correspond at least approximately to the total extension of two subsequent inlet openings (10,11,12), including the distance which separates the same.

2. A mixer valve as set forth in Claim 1, characterized in that all said inlet openings (10-12) are aligned on a circle in said partially spherical seat (6) of the fixed member (5) of the valve.

3. A mixer valve as set forth in Claim 1, characterized in that said inlet openings (10-12) are arranged near a circle on said partially spherical seat (6) of the fixed member (5) of the valve, and their mutual level differences with respect to said circle do not overcome 50% of the useful diameter of the tubular gaskets (10-12) inserted in said inlet openings.

4. A mixer valve as set forth in Claim 1, characterized in that said opening (17) elongated in its whole, formed in the spherical valving member (14), is uninterrupted.

5. A mixer valve as set forth in Claim 1, characterized in that said opening (17) elongated in its whole, formed in the spherical valving member (14), is subdivided into several partial openings by some bridges.

6. A mixer valve as set forth in Claim 1, characterized in that said outlet opening (16) of the spherical valving member (14), and said outlet opening (7) of the fixed member (5) of the valve, are arranged and sized in such a way as to reduce the passage section in certain positions of the valve, thus giving rise to a pre-closure effect.

7. A mixer valve as set forth in Claim 1, characterized in that it comprises an auxiliary member (5), distinguished from the valve body (1) and inserted and fixed in said body, said inlet openings (10-12) being formed in said auxiliary member (5).

8. A mixer valve as set forth in Claim 7, characterized in that said auxiliary member (5) has the character of a cartridge.

9. A mixer valve as set forth in any one of Claims 1 to 8, characterized in that in the partially spherical surface (6) of the fixed member (5) of the valve there are formed two openings (10,11) for inlet of cold water and one opening (12) for inlet of hot water.

10. A mixer valve as set forth in any one of Claims 1 to 8, characterized in that in the partially spherical surface (6) of the fixed member (5) of the valve there are formed two openings for inlet of hot water and one opening for inlet of cold water.
